# EUROPÄISCHE PATENTSCHRIFT

(11) **EP 3 590 739 B1**
(45) Veröffentlichungstag und Bekanntmachung des Hinweises auf die Patenterteilung: **28.04.2021**
(21) Anmeldenummer: 19184497.6
(22) Anmeldetag: 04.07.2019
(51) Int. Cl.: B60D 1/06, B60D 1/24, B60D 1/30, B60D 1/32

(54) **ANHÄNGERKUPPLUNG MIT EINER REIBUNGSBREMSE UND VERFAHREN**
TRAILER COUPLING WITH A FRICTION BRAKE AND METHOD
ATTELAGE DE REMORQUE DOTÉ D'UN FREIN À FRICTION ET PROCÉDÉ

(30) Priorität: 06.07.2018 DE 202018103896 U
(43) Veröffentlichungstag der Anmeldung: 08.01.2020
(73) Patentinhaber: Alois Kober GmbH, 89359 Kötz (DE)
(72) Erfinder: Frank, Thomas, 89129 Setzingen (DE)
(74) Vertreter: ERNICKE Patent- und Rechtsanwälte

(56) Entgegenhaltungen:
- EP-A2- 2 070 736
- DE-A1- 3 829 132
- DE-C1- 4 421 209

## Beschreibung

Die Erfindung betrifft eine Anhängerkupplung mit einer Reibungsbremse und ein Verfahren zum reibenden Dämpfen von Schlingerbewegungen eines Fahrzeuganhängers mit den Merkmalen im Oberbegriff des Hauptanspruchs.

Ein solche Anhängerkupplung ist aus der DE 10 2005 031 505 B4 bekannt. Die Reibstößel ragen aus dem Kupplungsgehäuse und sind an diesen Enden mit blattfederartigen Zangenhebeln verbunden, die von einem schwenkbaren Betätigungshebel mittels eines Nockengetriebes beaufschlagt werden. Dieses drückt mit einer distanziert von den Reibstößeln angeordneten Nockenbahn auf die Zangenhebel, wobei bei der Spannbewegung der Zangenhebel die angebundenen Reibstößel mitgenommen und an eine Kupplungskugel zugestellt werden.

Die EP 2 070 736 A2 zeigt eine ähnliche Anhängerkupplung nebst Reibungsbremse mit Zangenarmen.

Bei der Anhängerkupplung mit Reibungsbremsen der DE 38 29 132 A1, werden die Reibstößel beidseits von nockengeführten Schwenkhebeln beaufschlagt.

Die DE 44 21 209 C1 lehrt eine Anhängerkupplungen mit Reibbremse und einer auf die Reibstößel einwirkenden Spannkappe.

Es ist Aufgabe der vorliegenden Erfindung, eine Anhängerkupplung mit einer verbesserten Reibungsbremse und ein verbessertes Dämpfverfahren aufzuzeigen.

Die Erfindung löst diese Aufgabe mit den Merkmalen im Hauptanspruch.
Die beanspruchte Anhängerkupplung mit der verbesserten Reibungsbremse und das Verfahren haben verschiedene Vorteile.

Durch den als Bestandteil des Steigungsgetriebes ausgebildeten Treibring können die Kräfte und Bewegungen des drehbaren Betätigungsmittels besser und wirksamer sowie direkter auf den Reibstößel übertragen werden als beim eingangs genannten Stand der Technik. Die Effizienz und Einstellbarkeit der beanspruchten Reibungsbremse wird verbessert. Zudem sind der Bauaufwand und die Störkonturen geringer.

Andererseits sind die Betriebssicherheit und der Schutz vor äußeren Umwelteinflüssen besser als beim Stand der Technik. Die Bestandteile der Reibungsbremse können größtenteil gekapselt und verschmutzungssicher an der Anhängerkupplung angeordnet werden. Außerdem wird die Unfallsicherheit verbessert. Eine Quetschgefahr durch außenliegende und zerklüftete Teile wie beim eingangs genannten Stand der Technik kann vermieden werden.

Der entlang der Längsachse des Reibstößel bewegliche Treibring kann den Vorschub des Reibstößels auf direktem Wege und entlang der besagten Längsachse bewirken. Die Bewegungen des Treibrings und des Reibstößels sind gleichachsig und gleichgerichtet. Der Treibring kann unter Zwischenschaltung einer Federanordnung auf den Reibstößel einwirken und diesen bei Anlage am Kupplungselement, insbesondere einer Kupplungskugel, mit einer Spannkraft beaufschlagen.

Die Reibungsbremse kann zwei einander gegenüberliegende Reibstößel und zwei Steigungsgetriebe sowie ein bevorzugt gemeinsames Betätigungsmittel aufweisen. Dies erleichtert und vereinfacht die Bedienung und sorgt für eine hohe Effizienz der Reibungsbremse sowie für eine komfortable Bedienung.

Das Steigungsgetriebe weist mindestens eine gebogene Steigungsbahn auf, die eine in Vorschubrichtung des Reibstößels gerichtete Steigung hat. Das Steigungsgetriebe kann unterschiedlich ausgebildet sein, z.B. als Nockengetriebe mit einem losen Treibring, wobei die gebogene Steigungsbahn als Keilnockenbahn am stirnseitigen Kontaktbereich zwischen Treibring und Betätigungsmittel angeordnet ist. In einer anderen Ausführung kann das Steigungsgetriebe als Spindelgewinde mit einer Ausbildung des Treibrings als Spindelmutter gestaltet sein.

Das Steigungsgetriebe, insbesondere Nockengetriebe, kann in einer besonders vorteilhaften Variante als Doppelnockengetriebe ausgebildet sein, welches hubsteigernd zusammenwirkende stirnseitige Keilnockenbahnen am Treibring und am Betätigungsmittel aufweist. Der Hub bzw. die Vorschublänge des jeweiligen Reibstößels kann dadurch deutlich größer als beim eingangs genannten Stand der Technik sein. Die Steigungen der beiden paarweise zusammenwirkenden und im Eingriff stehenden Keilnockenbahnen kann sich addieren. Günstig ist außerdem, wenn die Keilnockenbahnen gebogen und jeweils konzentrisch zur Längsachse des Reibstößels angeordnet sind.

Alternativ kann das Nockengetriebe nur eine einzelne gebogene Keilnockenbahn aufweisen. Diese kann z.B. am Betätigungsmittel angeordnet sein und im Kontakt mit einer zugewandten Treibfläche am Treibring zusammenwirken, die eben bzw. steigungsfrei ausgebildet oder mit einem gerundeten Druckstift oder dgl. versehen sein kann. Die Anordnung kann auch umgekehrt sein. Es können auch zwei oder mehr solcher gebogener Keilnockenbahnen vorhanden sein.

Am Treibring können zwei gleichläufige halbringförmige Keilnockenbahnen angeordnet sein, die sich jeweils über einen Bogenwinkel von 180° erstrecken. Am Betätigungsmittel können ebenfalls zwei korrespondierende und halbringförmige Keilnockenbahnen vorhanden sein. Die insgesamt vier Keilnockenbahnen bilden zwei jeweils miteinander in Eingriff stehende Paarungen von Keilnockenbahnen, die einander diametral zur Längsachse des Reibstößels gegenüberliegen. Dies sorgt für eine mehrseitige und gleichmäßige Krafteinleitung der Betätigungskräfte auf die Ringscheibe. Eine ungleichmäßige Momentenbelastung des Reibstößels und eine Kippgefahr können vermieden werden.

In einer Abwandlung können der Treibring und das Betätigungsmittel jeweils eine andere Zahl und Ausbildung von Keilnockenbahnen oder von Keilnockenbahn-Paarungen haben. Es kann z.B. nur eine einzelne Nockenbahn-Paarung vorhanden sein. Die Keilnockenbahnen können sich jeweils über einen Bogenwinkel von z.B. 360° oder weniger erstrecken. Die Zahl der besagten Keilnockenbahnen kann andererseits größer als zwei, z.B. drei oder vier, sein.

Die beanspruchte Reibungsbremse kann an einem hohlen seitlichen Gehäuseansatz des Kupplungsgehäuses angeordnet sein. Der Treibring, der Reibstößel und die Federanordnung können im Gehäuseansatz, insbesondere in einer axial durchgehenden Aufnahmeöffnung, gemeinsam angeordnet sein. Der Treibring und ggf. der Reibstößel können zumindest teilweise im hohlen Gehäuseansatz, insbesondere in der besagten Aufnahmeöffnung, angeordnet und ggf. hier auch außenseitig geführt sein.

Die Reibungsbremse kann eine Geradführung für den Treibring aufweisen. Sie verhindert eine Verdrehung des Treibrings unter Einwirkung des drehenden Betätigungsmittels. Die Wirkung ist ähnlich wie bei einer Spindelmutter. Der Treibring kann von der Funktion her eine Art Keilmutter sein.

Die Reibungsbremse kann auch eine Endlagensicherung aufweisen. Diese kann z.B. ein unerwünschtes Öffnen der geschlossenen und gespannten Reibungsbremse verhindern. Die Endlagensicherung kann z.B. an der Geradführung angeordnet sein.

Die besagte Federanordnung kann zwischen dem Treibring und einem verbreiterten Belagträger des Reibstößels angeordnet sein. Die Federanordnung kann eine zwischen Treibring und Reibstößel angeordnete und hier wirkende Spannfeder aufweisen, mit der die Spannkraft auf den am Kupplungselement anliegenden Reibstößel aufgebracht wird. Zusätzlich kann eine Rückstellfeder für den Treibring vorhanden sein, die für eine Rückbewegung in die Ausgangslage bei geöffneter und entspannter Reibungsbremse sorgt.

Die beanspruchte Reibungsbremse kann eine Führungseinrichtung für den Reibstößel und den Treibring sowie ggf. die Federanordnung aufweisen. Die Führungseinrichtung kann im besagten seitlichen Gehäuseansatz, insbesondere in dessen Aufnahmeöffnung, angeordnet sein. Hierbei kann eine bevorzugt konzentrische Führungshülse für die innenseitige Führung vorhanden sein. Die Innenwandung der Aufnahmeöffnung kann an der außenseitigen Führung beteiligt sein.

Der Reibstößel kann einen verbreiterten und scheibenartigen Belagträger sowie einen hiervon zentrisch ausgehenden und entlang der Längsachse gerichteten Stößelschaft aufweisen. Die Führungseinrichtung kann eine axiale Führungshülse aufweisen, in der innenseitig der Stößelschaft und außenseitig der Treibring sowie ggf. die Federanordnung geführt werden kann.

Die Führungshülse kann unterschiedlich ausgebildet und angeordnet sein. In einer Ausführung kann sie am Betätigungsmittel befestigt, insbesondere angeformt sein. Sie kann sich dabei von außen in den hohlen Gehäuseansatz erstrecken.

In einer anderen Variante kann die Führungshülse entlang der Längsachse beweglich angeordnet sein und an ihrem einen Stirnende einen außenseitigen Flansch und an ihrem anderen Stirnende einen lösbaren Anschlag für den aufgezogenen Treibring aufweisen. Der lösbare Anschlag kann z.B. als Anschlagmutter ausgebildet sein. Diese Führungshülse befindet sich ebenfalls im hohlen Gehäuseansatz. Sie ist hier schwimmend zwischen dem Betätigungsmittel und dem Kupplungselement angeordnet.

Der Reibstößel kann eine lösbare und vorschubtolerante Arretierung aufweisen. Diese kann insbesondere an der Führungseinrichtung angeordnet sein. Sie kann sich z.B. zwischen der Führungshülse und dem Stößelschaft befinden.

Das Betätigungsmittel ist am Kupplungsgehäuse drehbar mittels einer Lagerung, vorzugsweise eines Wälzlagers, gelagert. Die Lagerung, insbesondere das Wälzlager, kann sich zwischen einem topfartigen Betätigungskopf und dem jeweiligen Gehäuseansatz befinden. Es kann von außen mittels Wälzelementen, insbesondere Lagerkugeln, durch eine Zuführung am Betätigungselement befüllt werden. Das Wälzlager kann dadurch nach Aufstecken des Betätigungselements am seitlichen Gehäuseansatz gebildet werden und sichert dann die Lagerposition des Betätigungselements am Kupplungsgehäuse.

Die beanspruchte Anhängerkupplung mit einer Reibungsbremse und das Verfahren können folgende vorteilhafte Ausgestaltungsmerkmale haben, die einzeln oder in beliebiger Kombination miteinander benutzt werden können.

Das als Doppelnockengetriebe ausgebildete Steigungsgetriebe kann am Treibring und am Betätigungsmittel jeweils zwei zusammenwirkende und konzentrisch zur Längsachse angeordnete halbringförmige Keilnockenbahnen aufweisen.

Die Reibungsbremse kann an einem hohlen seitlichen Gehäuseansatz eines Kupplungsgehäuses der Anhängerkupplung angeordnet sein.

Der Treibring kann im hohlen seitlichen Gehäuseansatz angeordnet und geführt sein.

Die Reibungsbremse kann eine Geradführung für den Treibring aufweisen.

Außenseitig am hohlen seitlichen Gehäuseansatz kann das Betätigungsmittel um die Längsachse des Reibstößels drehbar mittels einer Lagerung, insbesondere einer Wälzlagerung, gelagert sein.

Im hohlen seitlichen Gehäuseansatz können außer dem Treibring auch der Reibstößel und eine Führungseinrichtung für den Reibstößel sowie eine zwischen Treibring und Reibstößel befindliche Federanordnung angeordnet sein.

Eine axiale Führungshülse der Führungseinrichtung kann innenseitig den Stößelschaft und außenseitig den Treibring führen.

Die axiale Führungshülse kann am Betätigungsmittel befestigt sein.

Die axiale Führungshülse kann entlang der Längsachse beweglich angeordnet sein. Sie kann an ihrem einen Stirnende einen außenseitigen Flansch und an ihren anderen Stirnende einen lösbaren Anschlag, insbesondere eine Anschlagmutter, für den aufgezogenen Treibring aufweisen.

Der Flansch der Führungshülse kann einem Belagträger des Reibstößels zugewandt sein.

Ein topfartige Betätigungskopf des Betätigungsmittels kann den seitlichen Gehäuseansatz außenseitig umgreifen, wobei dazwischen ein Lager, insbesondere ein Wälzlager, angeordnet ist.

Der topfartige Betätigungskopf kann eine außenseitig mündende Zuführung für Wälzelemente eines Wälzlagers aufweisen.

Die Anhängerkupplung kann außer der Reibungsbremse eine Kupplungsmechanik zum lösbaren Ankuppeln an einem zugfahrzeugseitigen Kupplungselement, insbesondere einer Kupplungskugel, aufweisen.

Die Erfindung ist in den Zeichnungen beispielhaft und schematisch dargestellt. Im Einzelnen zeigen:
- Figur 1:: einen Fahrzeuganhänger und ein Zugfahrzeug mit einer Anhängerkupplung und einer Reibungsbremse,
- Figur 2:: die Anhängerkupplung mit einer Hälfte der Reibungsbremse und einem distanziert dargestellten Betätigungselement,
- Figur 3:: eine abgebrochene Unteransicht eines seitlichen Gehäuseansatzes mit einem Teil der Reibungsbremse gemäß Pfeil III von Figur 2,
- Figur 4:: eine teilweise aufgebrochene Frontansicht der Anhängerkupplung und der nur einseitig dargestellten Reibungsbremse,
- Figur 5:: eine perspektivische Ansicht eines Reibstößels mit einer Federanordnung und einem Treibring,
- Figur 6:: den Reibstößel und den Treibring von Figur 5 in einer Exlosionsdarstellung ohne Federanordnung,
- Figur 7:: einen Querschnitt durch die Anhängerkupplung und die einseitig dargestellte Reibungsbremse,
- Figur 8:: eine perspektivische Ansicht eines Betätigungsmittels,
- Figur 9:: eine abgebrochene und vergrößerte perspektivische Detailansicht des Betätigungsmittels von Figur 8 und eines zugehörigen Treibrings,
- Figur 10:: eine Schnittdarstellung des Betätigungselements von Figur 8 und 9,
- Figur 11:: eine Variante der Anhängerkupplung und der Reibungsbremse in halbseitiger perspektivischer Darstellung,
- Figur 12:: einen Halbschnitt durch die Anhängerkupplung und die Reibungsbremse von Figur 11,
- Figur 13:: eine perspektivische Ansicht des Treibrings, der Federanordnung und des Reibstößels von Figur 11 und 12 und
- Figur 14:: einen Schnitt durch die Anordnung von Figur 13.

Die Erfindung betrifft eine Anhängerkupplung (1) mit einer Reibungsbremse (2) für einen Fahrzeuganhänger (3). Die Erfindung betrifft außerdem einen solchen Fahrzeuganhänger (3) mit einer Anhängerkupplung (1) und einer Reibungsbremse (2). Die Erfindung bezieht sich ferner auf ein Verfahren zum reibenden Dämpfen von Schlingerbewegungen des Fahrzeuganhängers (3).

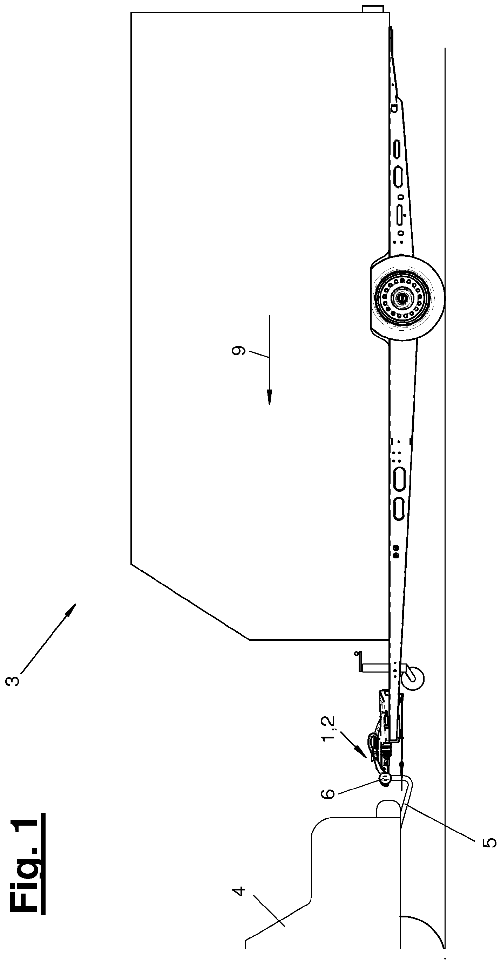

Figur 1 zeigt ein Gespann mit einem Zugfahrzeug (4) und einem Fahrzeuganhänger (3), die in einer Fahrtrichtung oder Zugrichtung (9) bewegt werden. Dies ist zugleich die Längsrichtung des Fahrzeuganhängers (3). Das Zugfahrzeug (4) hat eine Zugkupplung (5) mit einem Kupplungselement (6), welches z.B. als Kupplungskugel ausgebildet ist, wobei es alternativ eine andere, z.B. zapfenartige Ausbildung haben kann.

Der Fahrzeuganhänger (3) weist ein Chassis mit mindestens einer Achse und einem Aufbau sowie einer frontseitigen, bevorzugt starren Deichsel auf. Der Fahrzeuganhänger (3) hat ferner eine Anhängerkupplung (1), die mit dem Kupplungselement (6) zusammenwirkt. Sie ist bevorzugt am vorderen Deichselende angeordnet. Die Anhängerkupplung (1) weist ein Kupplungsgehäuse (7) mit einer darin angeordneten hohlen Aufnahme (8) für das Kupplungselement sowie eine Kupplungsmechanik auf. Diese ist der Übersicht halber nicht dargestellt. Sie weist z.B. einen Bedienhebel mit einer beaufschlagten schalenförmigen Kalotte zum Einspannen des Kupplungselements (6) in Ankuppelstellung auf. Die Aufnahme (8) kann an der Frontseite ebenfalls eine schalenförmige Innenfläche zur Anlage am Kupplungselement (6) aufweisen. Diese Schalenfläche und die Kalotte liegen in Zugrichtung (9) hintereinander.

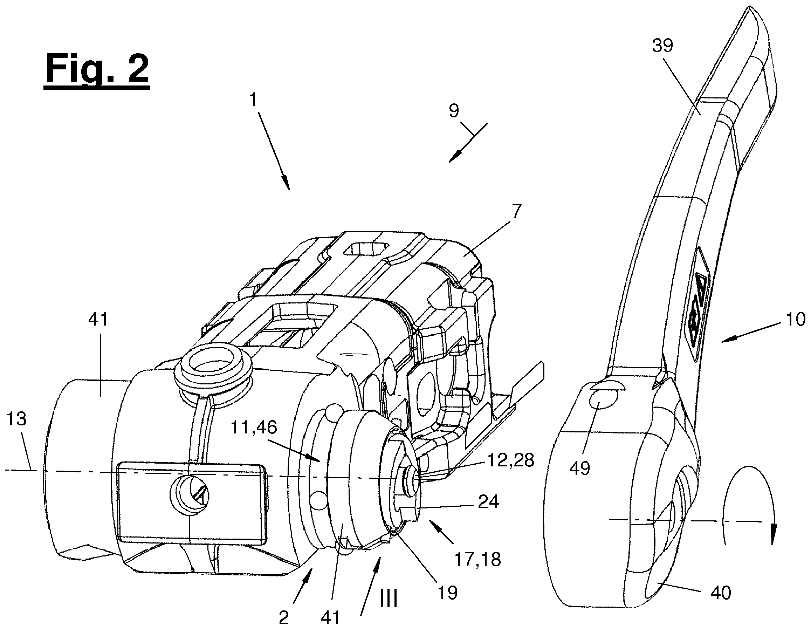

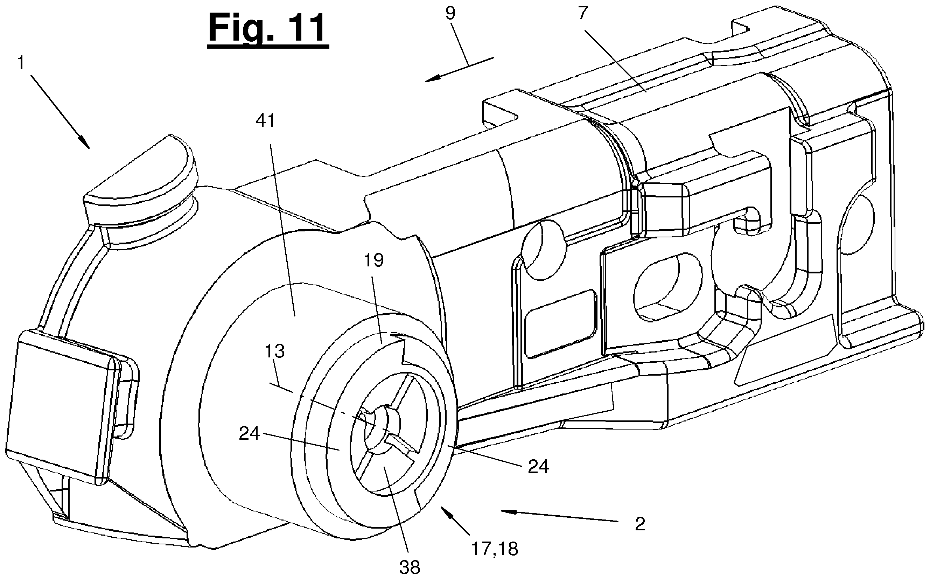

Die Anhängerkupplung (1) weist außerdem eine Reibungsbremse (2) auf, mit der Schlingerbewegungen des Fahrzeuganhängers (3) um den Ankuppelpunkt durch Reibung gedämpft werden können. Die Anhängerkupplung (1) und die Reibungsbremse (2) sind in den Figuren 2 bis 14 in zwei Varianten näher dargestellt und nachfolgend beschrieben. Figur 2 bis 10 zeigen die erste Variante und Figur 11 bis 13 die zweite Variante.

Die Reibungsbremse (2) weist in beiden Varianten jeweils mindestens einen Reibstößel (12) auf, der seitlich vom Kupplungselement (6) im Kupplungsgehäuse (7) angeordnet ist und quer zur Zugrichtung (9) ausgerichtet und bewegbar ist. Der Reibstößel (12) drückt mit einem Reibbelag (26) gegen das Kupplungselement (6) und bringt dadurch die Reibkraft zur Dämpfung von Schlingerbewegungen um die Hochachse und um die Querachse am Kupplungselement (6) auf. In den gezeigten Ausführungsformen sind jeweils zwei Reibstößel (12) vorhanden, die einander am Kupplungselement (6) gegenüberliegen und beidseits am Kupplungselement (6) angreifen.

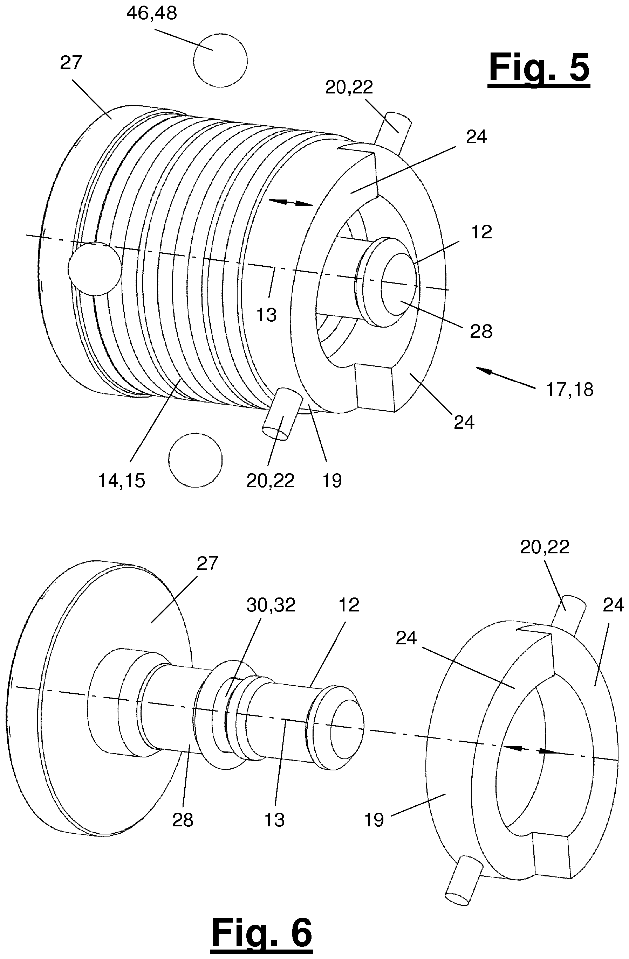

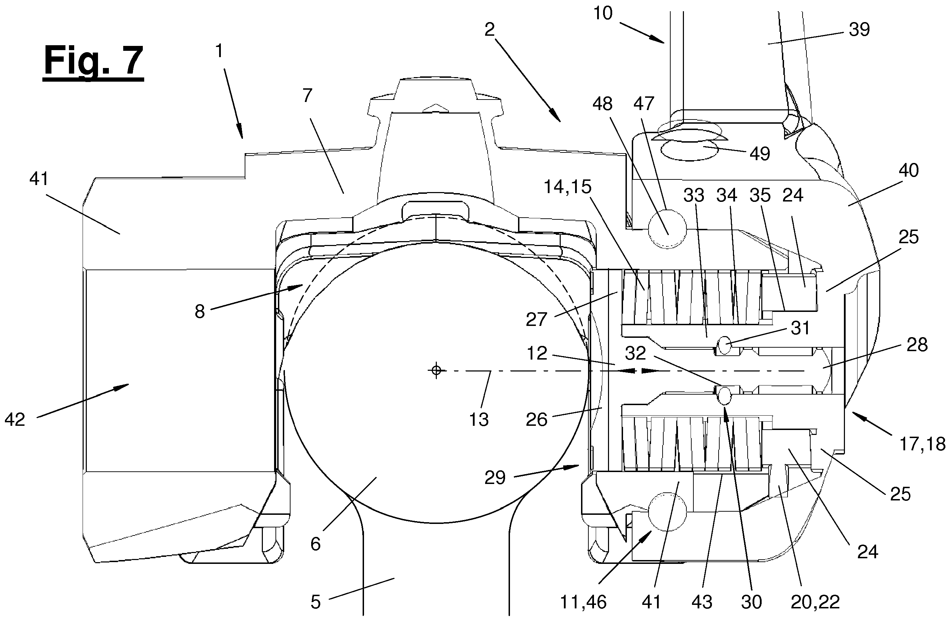

Der Reibstößel (12) kann in beiden Varianten gleich ausgebildet sein. Er besteht z.B. gemäß Figur 6 aus einem verbreiterten Belagträger (27), der an der Frontseite den Reibbelag (26) trägt. Der Belagträger (27) hat z.B. eine Scheibenform mit einem kreisrunden Umfang und mit einer zentralen Längsachse (13). Der Umfang kann alternativ prismatisch sein. Der Reibstößel (12) weist ferner einen axialen Stößelschaft (28) auf, der konzentrisch zur Längsachse (13) ausgerichtet und stirnseitig am Belagträger (27) befestigt ist. Der Stößelschaft (28) kann massiv oder hohl ausgebildet sein. Er kann eine im Wesentlichen zylindrische Form aufweisen, wobei stellenweise ringförmige Verdickungen und/oder eine Nut (32) vorhanden sein können. Figur 7, 12 und 14 zeigen die Reibstößelausbildung in beiden Varianten.

Die Reibungsbremse (2) weist in beiden Varianten ein drehbares Betätigungsmittel (10) und ein Steigungsgetriebe (17) mit einer gebogenen Steigungsbahn zur Umsetzung der Drehbewegung des Betätigungsmittels (10) in eine axiale Vorschubbewegung des Reibstößels (12) auf. Das Betätigungsmittel (10) dreht vorzugsweise um die Längsachse (13) des oder der Reibstößel (12).

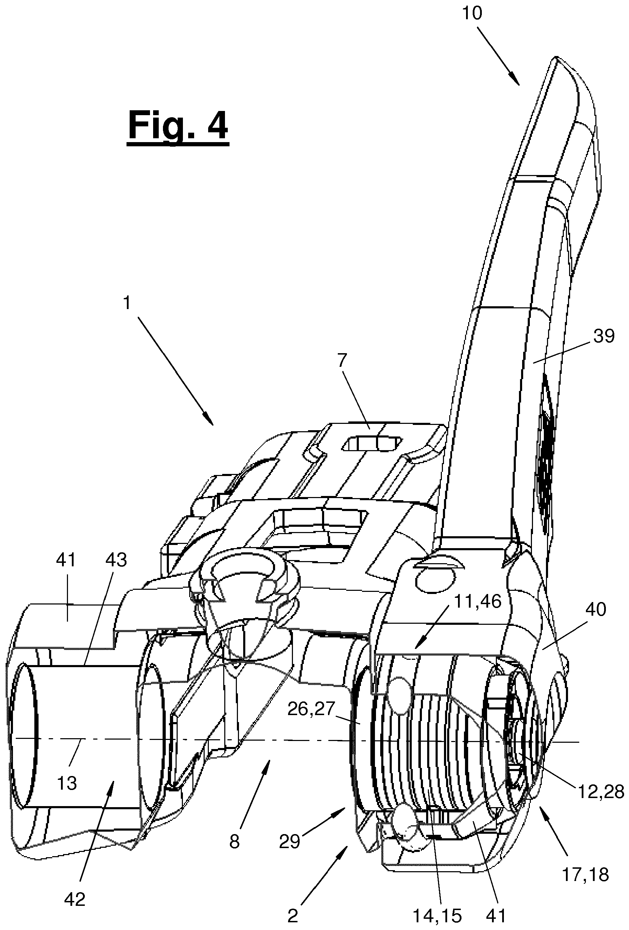

In den gezeigten Ausführungsformen sind jeweils zwei Steigungsgetriebe (17) sowie ein bevorzugt gemeinsames Betätigungsmittel (10) vorhanden. Das Betätigungsmittel (10) ist in Figur 4 und 7 der ersten Variante nur an einer Seite der Anhängerkupplung (1) und der Reibungsbremse (2) dargestellt. In der zweiten Variante von Figur 11 bis 13 ist das Betätigungsmittel (10) der Übersicht halber nicht dargestellt.

Das Betätigungsmittel (10) ist in beiden Varianten als Betätigungshebel ausgebildet. Es weist zumindest einen Arm (39) mit einem Griff am einen Ende und einem topfartigen Betätigungskopf (40) am anderen Ende auf. Das Betätigungsmittel (10) kann zwei einzelne und getrennt voneinander bedienbare Arme (39) und Betätigungsköpfe (40) aufweisen. In einer vorteilhaften und nicht dargestellten Ausführung sind die Arme (39) an ihrem einen freien Endbereich miteinander quer verbunden, wodurch ein gemeinsames Betätigungsmittel (10) gebildet wird. Das Betätigungsmittel (10) kann z.B. als Formteil, insbesondere als Gussteil oder Spritzteil aus Metall oder Kunststoff ausgebildet sein.

Das Steigungsgetriebe (17) weist einen losen Treibring (19) auf, der auf und entlang der Längsachse (13) beweglich angeordnet ist und der den Vorschub des Reibstößels (12) bewirkt. Der Treibring (19) wirkt dabei bevorzugt mittels einer Federanordnung (14) auf den zugeordneten Reibstößel (12) ein.

Die Federanordnung (14) befindet sich in beiden Varianten zwischen dem Treibring (19) und dem Reibstößel (12), insbesondere dessen Belagträger (27), und ist bevorzugt konzentrisch zur Längsachse (13) angeordnet. In einer anderen Varianten kann die Federanordnung am Betätigungsmittel (10) angeordnet sein. Die Federanordnung (14) weist eine Spannfeder (15) und ggf. eine Rückstellfeder (16) auf. Die Spannfeder (15) wird bei Vorschub des Reibstößels (12) gespannt und bewirkt dessen federnde Anpressung am Kupplungselement (6).

Die Steigungsbahn des Steigungsgetriebes (17) ist konzentrisch um die Längsachse (13) gebogen und weist eine in Vorschubrichtung längs der Achse (13) gerichtete Steigung auf. Die Steigungsbahn ist am stirnseitigen Kontaktbereich zwischen Treibring (19) und Befestigungsmittel (10) angeordnet. Sie kann einzeln oder mehrfach vorhanden sein.

Der Treibring (19) ist über eine Geradführung (20) an einer Drehung um die Längsachse (13) gehindert. Die Drehbewegung des Betätigungsmittels (10) entlang der Steigungsbahn bewirkt die besagte axiale Vorschubbewegung des Treibrings (19) und des hiervon beaufschlagten Reibstößels (12).

In beiden Varianten ist das Steigungsgetriebe (17) als Doppelnockengetriebe (18) ausgebildet. Dieses weist hubsteigernd zusammenwirkende und konzentrisch zur Längsachse (13) angeordnete sowie gebogene stirnseitige Keilnockenbahnen (24,25) am Treibring (19) und am Betätigungsmittel (10) auf. Die gepaarten Keilnockenbahnen (24,25) sind z.B. komplementär ausgebildet und haben gleich große Steigungswinkel mit gegenläufigem Drehsinn. Die eine spiralförmige Keilnockenbahn steigt im Uhrzeigersinn an und die andere Keilnockenbahn entgegen dem Uhrzeigersinn. In der Ausgangs-Drehstellung des Doppelnockengetriebes (18) liegen die gepaarten Keilnockenbahnen (24,25) plan aneinander. Bei einer gegenseitigen Verdrehung um die gemeinsame Längsachse (13) gleiten die gepaarten Keilnockenbahnen (24,25) aneinander auf unter Erzeugung eines Axialhubs, der jeweils dem Doppelten der aktellen Steigungshöhe entspricht.

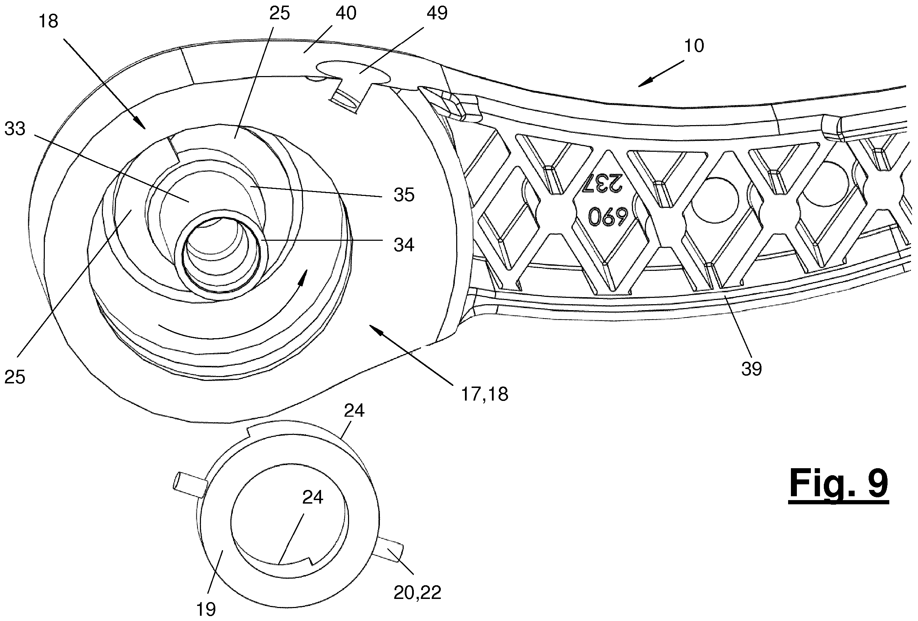

Am Treibring (19) und am Betätigungsmittel (10) sind jeweils zwei halbringförmige Keilnockenbahnen (24,25) angeordnet, die sich jeweils über einen Bogenwinkel von 180° erstrecken. Sie sind gleichsinnig ausgerichtet und haben die gleiche Steigung. Dadurch ergeben sich zwei einander diametral zur Längsachse (13) gegenüberliegende Paarungen von in Kontakt stehenden und zusammenwirkenden, halbringförmigen Keilnockenbahnen (24,25). Figur 9 zeigt beispielhaft für beide Varianten in einer Explosionsdarstellung das Doppelnockengetriebe (18) und die Zuordnung der Keilnockenbahnen (24,25).

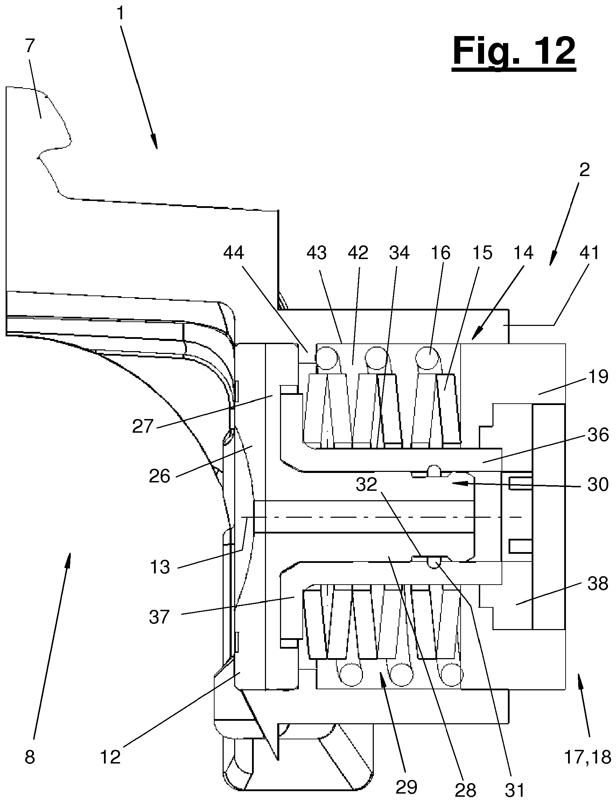

Figur 2 und 4 zeigen beispielhaft für beide Varianten die Reibungsbremse (2) in einer Zwischenstellung zwischen einer Öffnungsstellung sowie einer Schließ- und Spannposition. Zum Schließen wird der gezeigte Arm (39) in Pfeilrichtung und im Uhrzeigersinn gedreht, wobei der jeweilige Reibstößel (12) axial vorgeschoben und mit Federkraft an das Kupplungselement (6) angepresst wird. Zum Öffnen erfolgt eine Drehung in Gegenrichtung. Der jeweilige Reibstößel (12) kann frei beweglich sein und kann beim Abkuppeln vom Kupplungselement (6) in die in Figur 7 und 12 gezeigte Ausgangsstellung weggedrückt werden. Er kann alternativ durch einen Mitnehmer oder dgl aktiv zurückgeholt werden.

Die Reibungsbremse (2) ist an einem hohlen seitlichen Gehäuseansatz (41) des Kupplungsgehäuses (7) angeordnet. Hierbei ist das Betätigungsmittel (10) um die Längsachse (13) drehbar außenseitig am jeweiligen seitlichen Gehäuseansatz (41) mittels einer Lagerung (11) gelagert. Die Lagerung (11) ist in beiden Varianten z.B. als Wälzlager (46) ausgebildet, welches konzentrisch zur Längsachse (13) angeordnet ist und Lagerbahnen (47) am Außenmantel des seitlichen Gehäuseansatzes (41) und an der zylindrischen Innenwand des Betätigungskopfs (40) aufweist. Zwischen diesen konzentrischen Lagerbahnen (47) sind Wälzelemente (48), z.B. Lagerkugeln, angeordnet.

Der topfartige und zum Kupplungsgehäuse (7) hin offene Betätigungskopf (40) kann auf den seitlichen Gehäuseansatz (41) aufgesteckt werden, wobei das Wälzlager (46) nachträglich gebildet und mit Wälzelementen (48) befüllt wird. Die Wälzelemente (48) können dazu in der Steckstellung von außen mittels einer kanalartigen Zuführung (49) am Betätigungskopf (40) an die übereinander liegenden Lagerbahnen (47) zugeführt und entlang von diesen verteilt werden. Die Zuführung (49) kann anschließend mit einem Stöpsel oder dergleichen dicht verschlossen werden.

Die beiden hohlen seitlichen Gehäuseansätze (41) weisen jeweils eine durchgehende und entlang der Längsachse (13) ausgerichtete Aufnahmeöffnung (42) auf. Diese hat eine bevorzugt konzentrisch zur Längsachse (13) ausgerichtete Innenwand (43), die z.B. im Querschnitt kreisrund und in ihrer Längserstreckung zylindrisch ausgebildet ist. Alternativ ist eine prismatische Umrissform möglich.

Der Treibring (19) ist im jeweils zugehörigen hohlen seitlichen Gehäuseansatz (41), insbesondere in dessen Aufnahmeöffnung (42), angeordnet und geführt. Die Federanordnung (14) und der Reibstößel (12) sind ebenfalls im jeweiligen hohlen Gehäuseansatz (41), insbesondere der Aufnahmeöffnung (42) angeordnet. Die Reibungsbremse (2) weist eine Führungseinrichtung (29) für den Reibstößel (12) und den Treibring (19) sowie die Federanordnung (14) auf. Die Führungseinrichtung (29) kann von einer Führungshülse (33,36) und ggf. der Innenwand (43) der Aufnahmeöffnung (42) gebildet werden.

Die Federanordnung (14) und die Führungseinrichtung (29) können in den beiden Varianten der Reibungsbremse (2) unterschiedlich ausgebildet sein.

Der Treibring (19) weist in beiden Varianten eine zur Längsachse (13) konzentrische Ringform auf. Die radial innere Ringwand umgreift den Reibstößel (12), insbesondere den Stößelschaft (28). Sie kann mit der Führungseinrichtung (29) zusammenwirken. Die äußere umfangsseitige Ringwand hat z.B. eine kreisrunde bzw. zylindrische Form und kann ebenfalls mit der Führungseinrichtung (29) zusammenwirken.

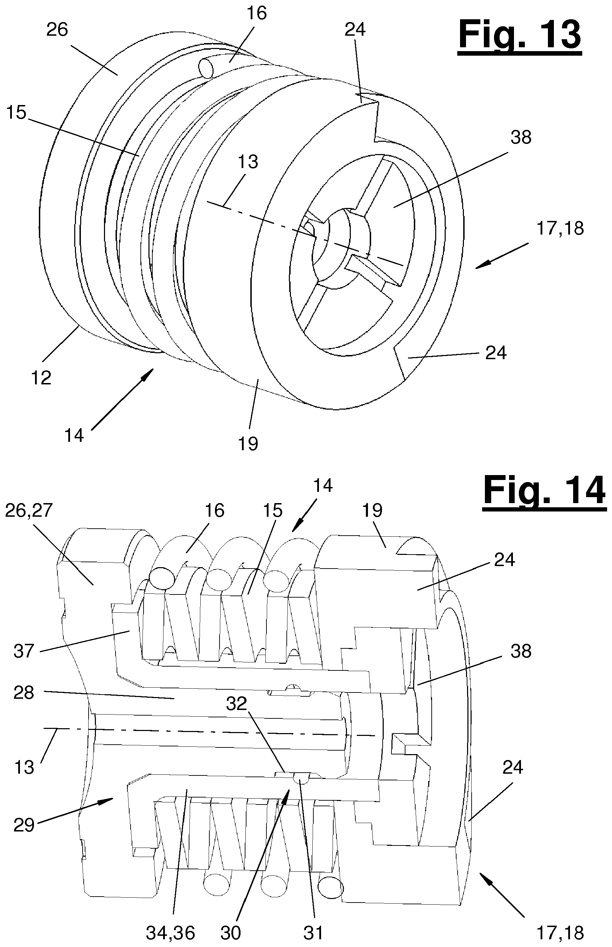

Die eine äußere Stirnseite des Treibrings (19) weist gem. Figur 5 und 6 der ersten Variante sowie Figur 13 und 14 der zweiten Variante jeweils eine oder zwei halbringförmigen Keilnockenbahnen (24) mit der in Richtung der Längsachse (13) gerichteten Steigung auf. Die andere Stirnseite kann eben sein und als Kontaktfläche zur Federanordnung (14) dienen.

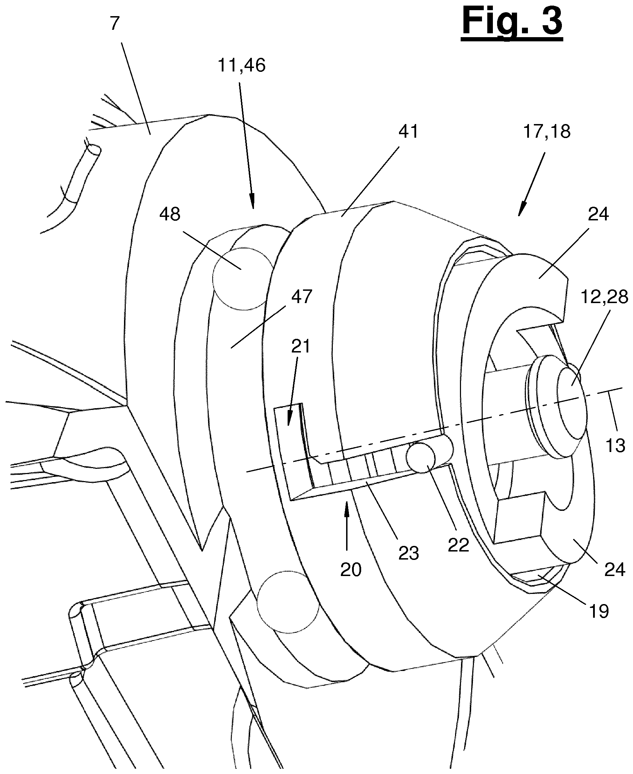

Der Treibring (19) weist in beiden Varianten die vorerwähnten Geradführung (20) auf, die allerdings nur bei der ersten Variante in Figur 3 und 5 bis 7 verdeutlicht ist. In Figur 3 ist außerdem eine Endlagensicherung (21) der Reibungsbremse (2) dargestellt.

Die Geradführung (20) wird von mind. einem, vorzugsweise zwei Zapfen (22) am Treibring (19) gebildet, die mit jeweils einem axialen Schlitz (23) an der Wandung des jeweiligen seitlichen Gehäuseansatzes (41) zusammenwirken. Sie sperren die Drehbewegung des Treibrings (19) bei einer drehenden Beaufschlagung des Steigungsgetriebes (17), insbesondere des Doppelnockengetriebes (18), und führen den Treibring (19) beim Vorschub entlang der Längsachse (13). Die Zapfen (22) sind radial ausgerichtet und am Mantel des Treibrings (19) befestigt.

Die Endlagensicherung (21) wird von einem in Umfangsrichtung abgewinkelten Endabschnitt des Schlitzes (23) gebildet, der sich in Drehrichtung des Betätigungsmittels (10) und des Steigungsgetriebes (17) bzw. Doppelnockengetriebes (18) bei der Schließbewegung der Reibungsbremse (2) erstreckt. Am Ende der axialen Vorschubbewegung und Spannung der Federanordnung (14) tauchen die Zapfen (22) in den jeweiligen Endabschnitt des Schlitzes (23) ein, dessen Schlitzwände dann eine Axialbewegung der Zapfen (22) entlang der Achse (13) und somit ein Lösen der Reibungsbremse (2) verhindern.

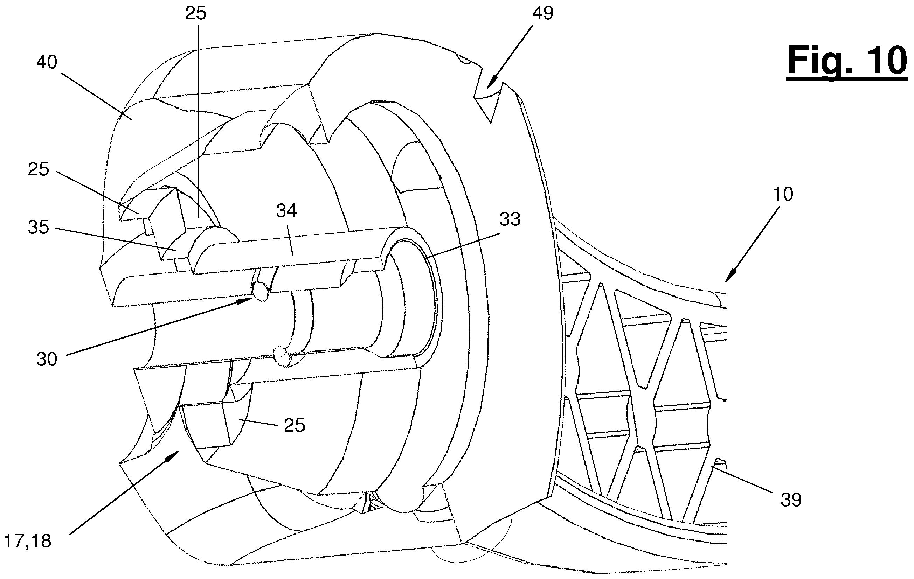

Der Treibring (19) taucht bei beiden Varianten in der Ausgangsstellung zumindest teilweise in die Aufnahmeöffnung (42) ein. Der stirnseitige Treibringbereich mit den Keilnockenbahnen (24) kann nach außen über den Gehäuseansatz (41) axial vorstehen und mit den Keilnockenbahnen (25) am Betätigungsmittel (10), insbesondere am jeweiligen Betätigungskopf (40), zusammenwirken. Wie Figur 7 bis 10 verdeutlichen, sind die beiden halbringförmigen Keilnockenbahnen (25) am Boden des topfartigen Betätigungskopfes (40) stirnseitig angeordnet. Der hohle Innenraum des Betätigungskopfes (40) kann gem. Figur 7 und 10 an die Außenkontur des zylindrischen Gehäuseansatzes (41) angepasst sein.

Die Führungseinrichtung (29) weist in beiden Varianten jeweils eine axiale Führungshülse (33,36) auf. In dieser kann innenseitig der Stößelschaft (28) geführt sein. Außenseitig kann an der axialen Führungshülse (33,36) der Treibring (19) sowie ggf. die Federanordnung (14) geführt sein. Die auf den Stößelschaft (28) konzentrisch aufgezogenen Federanordnung (14) kann an einem endseitigen und außenseitigen Führungsabschnitt (34) der Führungshülse (33,36) geführt sein. Dies kann bei beiden Varianten gleich sein.

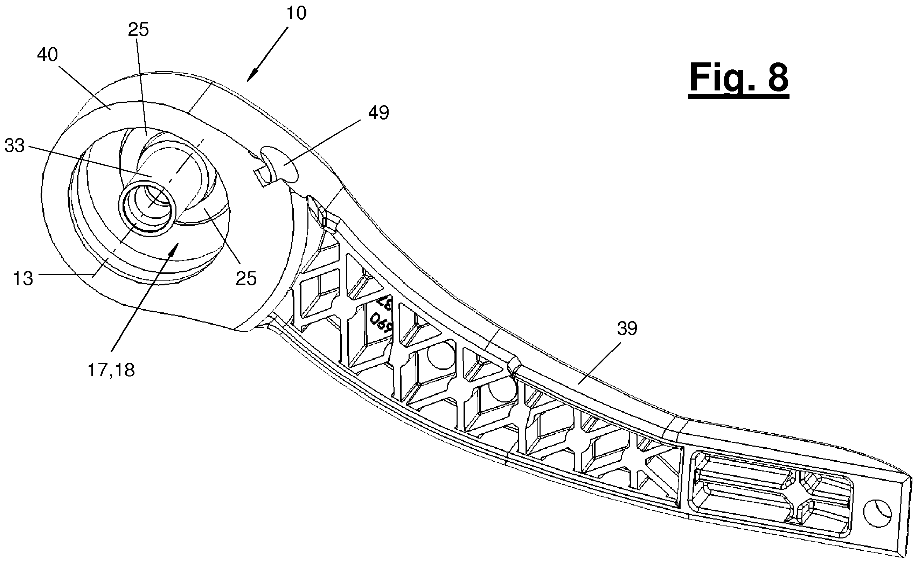

Bei der ersten und in Figur 7 verdeutlichten Variante ist die axiale Hülse (33) am Betätigungsmittel (10), insbesondere am Betätigungskopf (40) befestigt. Sie kann z.B. an dessen Boden angeformt sein. Die Hülse (33) ragt in der Montagestellung gemäß Figur 7 in den seitlichen Gehäuseansatz (41) und dessen Aufnahmeöffnung (42). Die Keilnockenbahnen (25) umgeben gemäß Figur 8 bis 10 die Hülse (33) am besagten Boden.

Der Führungsabschnitt (34) bildet die Außenseite des Hülsenschafts. Außerdem kann ein weiterer Führungsabschnitt (35) der Führungshülse (33) vorhanden sein, der z.B. als radial vorstehender Hülsenbund ausgebildet ist und auf dem der Treibring (19) bei der ersten Variante mit seiner inneren Ringwand anliegt und in Richtung der Längsachse (13) geführt ist. Hierbei kann ein radialer Abstand zwischen der äußeren Ringwand und der Innenwand (43) der Aufnahmeöffnung (42) bestehen.

Bei der zweiten Variante kann die Führungshülse (36) gem. Figur 12 eine andere Ausbildung und Funktion haben. Sie ist entlang der Längsachse (13) beweglich angeordnet und befindet sich zwischen dem Belagträger (26) und der in Figur 12 nicht dargestellten Betätigungseinrichtung (10).

Die zylindrische Hülse hat an ihrem einen Stirnende einen außenseitigen Flansch (37), der ringförmig abgebogen ist und zum Belagträger (27) weist. An ihrem anderen Stirnende ist ein lösbarer Anschlag (38) angeordnet, der auf den aufgezogenen Treibring (19) einwirkt und dessen Axialbewegung nach hinten und in Richtung zur Betätigungseinrichtung (10) begrenzt. Der lösbare Anschlag (38) ist z.B. als Anschlagmutter ausgebildet, die gem. Figur 13 und 14 auf das Hülsenende aufgeschraubt ist und stirnseitig Schlitze für ein Schraubwerkzeug aufweist.

Bei der zweiten Variante ist der Treibring (19) gem. Figur 12 und 14 mit seiner Innenwand auf dem Hülsenschaft (34) der Führungshülse (36) geführt. Er kann mit seiner äußeren Ringwand zusätzlich an der Innenwand (43) der Aufnahmeöffnung (42) geführt sein.

Bei der ersten Variante weist die Federanordnung (14) eine Spannfeder (15) auf, die zwischen dem Treibring (19) und dem Belagträger (27) angeordnet ist. Sie ist auf der Führungshülse (33) und/oder an der Innenwand (43) der Aufnahmeöffnung (42) geführt. Die Spannfeder (15) ist eine Druckfeder und kann in beliebig geeigneter Weise ausgeführt sein, z.B. als das gezeigte Tellerfederpaket.

Bei der zweiten Variante weist die Federanordnung (14) eine Spannfeder (15) auf, die auf der Führungshülse (36) aufgezogen und geführt ist. Sie kann ebenfalls als Tellerfederpaket oder in anderer Weise ausgebildet sein. Bei der zweiten Variante ist die Spannfeder (15) zwischen dem Treibring (19) und dem Flansch (37) angeordnet. Der Flansch (37) kontaktiert seinerseits den Belagträger (26) und kann hier lose anliegen.

Die Federanordnung (14) weist bei der zweiten Variante außerdem eine Rückstellfeder (16) auf, die für eine Rückstellung des Treibrings (19) beim Öffnen und Entspannen der Reibungsbremse (2) sorgt. Die Rückstellfeder (16) ist z.B. als Schraubenfeder ausgebildet und umgibt außenseitig die Spannfeder (15).

Die Rückstellfeder (16) kann sich gem. Figur 12 an der einen Stirnseite an einem Anschlag (44) in der Aufnahmeöffnung (42) abstützen und am anderen Stirnende an der Frontseite des Treibrings (19) anliegen. Der Anschlag (44) kann z.B. von einem radial vorstehenden Bund an der Innenwand (43) gebildet werden. Der Belagträger (27) kann in Ruhestellung oder Rückzugstellung an der anderen Seite des Anschlags bzw. Bunds (44) anliegen. Der Belagträger (26) kann an seiner äußeren Mantelfläche an der Innenwand (43) geführt sein. Diese außenseitige Führung kann auch bei der ersten Variante vorhanden sein. Die Innenwand (43) bildet mit diesen Führungsfunktionen einen Bestandteil der Führungseinrichtung (29).

In beiden Varianten kann der Reibstößel (12) eine lösbare und vorschubtolerante Arretierung (30) aufweisen. Diese kann insbesondere an der Führungseinrichtung (29) vorhanden sein. Mittels der Arretierung (30) ist ein Anstecken und Auswechseln des Reibstößels (12) möglich, z.B. bei Verschleiß des Reibbelags (26).

Die Arretierung (30) ist in beiden Varianten zwischen dem Stößelschaft (28) und der Innenwand der jeweils hohlen Führungshülse (33,36) ausgebildet und angeordnet. Die Arretierung (30) wird von einem Federring (31) und einer Nut (32) gebildet. Der Federring (31) wird z.B. in einer ringförmigen Aufnahme an der Innenwand der Führungshülse (33,36) versenkt aufgenommen und ragt in den hohlen Hülseninnenraum. Er greift dabei in die am Hülsenschaft (28) angeordnete Nut (32). Die Nut (32) hat eine begrenzte Länge, die gleich oder größer als der Vorschubweg des Reibstößels (12) ist. Die Arretierung (30) ist durch den radial nachgiebigen Federring (31) lösbar. Die Anordnung kann auch umgedreht sein.

Abwandlungen der gezeigten und beschriebenen Ausführungsformen sind in verschiedener Weise möglich. Insbesondere können die Merkmale der Ausführungsbeispiele bzw. Varianten und der genannten Abwandlungen in geeigneter Weise miteinander kombiniert oder auch ausgetauscht werden.

### BEZUGSZEICHENLISTE

- 1: Anhängerkupplung
- 2: Reibungsbremse
- 3: Fahrzeuganhänger
- 4: Zugfahrzeug
- 5: Zugkupplung
- 6: Kupplungselement, Kupplungskugel
- 7: Kupplungsgehäuse
- 8: Aufnahme für Kupplungselement, Kugelaufnahme
- 9: Fahrtrichtung
- 10: Betätigungsmittel, Betätigungshebel
- 11: Lagerung
- 12: Reibstößel
- 13: Längsachse
- 14: Federanordnung
- 15: Spannfeder
- 16: Rückstellfeder
- 17: Nockengetriebe
- 18: Doppelnockengetriebe
- 19: Treibring
- 20: Geradführung
- 21: Endlagensicherung
- 22: Zapfen
- 23: Schlitz
- 24: Keilnockenbahn an Treibring
- 25: Keilnockenbahn, Gegenbahn an Hebel
- 26: Reibbelag
- 27: Belagträger
- 28: Stößelschaft
- 29: Führungseinrichtung
- 30: Arretierung
- 31: Federring
- 32: Nut
- 33: Führungshülse an Hebel
- 34: Führungsabschnitt, Hülsenschaft
- 35: Führungsabschnitt, Hülsenbund
- 36: Führungshülse
- 37: Flansch
- 38: Anschlag lösbar, Anschlagmutter
- 39: Arm, Hebelarm
- 40: Betätigungskopf
- 41: Gehäuseansatz
- 42: Aufnahmeöffnung
- 43: Innenwand
- 44: Anschlag, Bund
- 45: Außenmantel
- 46: Wälzlager
- 47: Lagerbahn
- 48: Wälzelement, Lagerkugel
- 49: Zuführung für Wälzelemente

## Patentansprüche

1. Anhängerkupplung mit einer Reibungsbremse (2), die mindestens einen seitlich an ein zugfahrzeugseitiges Kupplungselement (6) anstellbaren Reibstößel (12), ein drehbares Betätigungsmittel (10) und ein Steigungsgetriebe (17) mit einer gebogenen Steigungsbahn zur Umsetzung der Drehbewegung des Betätigungsmittels (10) in eine Vorschubbewegung des Reibstößels (12) aufweist, **dadurch gekennzeichnet, dass** das Steigungsgetriebe (17) einen Treibring (19) aufweist, der auf und entlang der Längsachse (13) des Reibstößels (12) beweglich angeordnet ist und den Vorschub des Reibstößels (12) bewirkt.

2. Anhängerkupplung nach Anspruch 1, **dadurch gekennzeichnet, dass** die Reibungsbremse (2) zwei einander gegenüberliegende Reibstößel (12) und zwei Steigungsgetriebe (17) sowie ein bevorzugt gemeinsames Betätigungsmittel (10) aufweist.

3. Anhängerkupplung nach Anspruch 1 oder 2, **dadurch gekennzeichnet, dass** das Steigungsgetriebe (17) einen losen Treibring (19) aufweist, wobei die gebogene Steigungsbahn als Keilnockenbahn (24,25) am stirnseitigen Kontaktbereich zwischen Treibring (19) und Betätigungsmittel (10) angeordnet ist.

4. Anhängerkupplung nach Anspruch 1, 2 oder 3, **dadurch gekennzeichnet, dass** das Steigungsgetriebe (17) als Doppelnockengetriebe (18) ausgebildet ist, welches hubsteigernd zusammenwirkende und bevorzugt konzentrisch zur Längsachse (13) angeordnete und gebogene stirnseitige Keilnockenbahnen (24,25) am Treibring (19) und am Betätigungsmittel (10) aufweist.

5. Anhängerkupplung nach einem der vorhergehenden Ansprüche, **dadurch gekennzeichnet, dass** das Betätigungsmittel (10) um die Längsachse (13) drehbar am Kupplungsgehäuse (7), insbesondere außenseitig an einem seitlichen Gehäuseansatz (41), mit einer Lagerung (11), insbesondere einem Wälzlager (46), gelagert ist.

6. Anhängerkupplung nach einem der vorhergehenden Ansprüche, **dadurch gekennzeichnet, dass** die Reibungsbremse (2) eine Endlagensicherung (21), bevorzugt an der Geradführung (20), aufweist.

7. Anhängerkupplung nach einem der vorhergehenden Ansprüche, **dadurch gekennzeichnet, dass** der Treibring (19) über eine Federanordnung (14) auf den Reibstößel (12) einwirkt.

8. Anhängerkupplung nach Anspruch 7, **dadurch gekennzeichnet, dass** die Federanordnung (14) eine zwischen Treibring (19) und Reibstößel (12) wirkende Spannfeder (15) und ggf. eine Rückstellfeder (16) für den Treibring (19) aufweist.

9. Anhängerkupplung nach einem der vorhergehenden Ansprüche, **dadurch gekennzeichnet, dass** die Reibungsbremse (2) eine Führungseinrichtung (29) für den Reibstößel (12) und den Treibring (19) sowie ggf. die Federanordnung (14) aufweist

10. Anhängerkupplung nach Anspruch 9, **dadurch gekennzeichnet, dass** die Führungseinrichtung (29) eine axiale Führungshülse (33,36) aufweist, in der innenseitig ein Stößelschaft (28) des Reibstößels (12) und an der außenseitig der Treibring (19) sowie ggf. die Federanordnung (14) geführt ist.

11. Anhängerkupplung nach einem der vorhergehenden Ansprüche, **dadurch gekennzeichnet, dass** der Reibstößel (12) eine lösbare und vorschubtolerante Arretierung (30), insbesondere an der Führungseinrichtung (29), aufweist.

12. Anhängerkupplung nach einem der vorhergehenden Ansprüche, **dadurch gekennzeichnet, dass** das Betätigungsmittel (10) einen Arm (39) und einen endseitigen, topfartigen Betätigungskopf (40) aufweist.

13. Anhängerkupplung nach Anspruch 12, **dadurch gekennzeichnet, dass** der topfartige Betätigungskopf (40) innenseitig, insbesondere an seinem Boden, mindestens eine Keilnockenbahn (25) und ggf. eine Führungshülse (33) aufweist.

14. Fahrzeuganhänger mit einer Anhängerkupplung (1) mit einer Reibungsbremse (2), **dadurch gekennzeichnet, dass** die Anhängerkupplung (1) nach mindestens einem der Ansprüche 1 bis 13 ausgebildet ist.

15. Verfahren zum reibenden Dämpfen von Schlingerbewegungen eines Fahrzeuganhängers (3) mittels einer Anhängerkupplung (1) mit einer Reibungsbremse (2), die mindestens einen seitlich an ein zugfahrzeugseitiges Kupplungselement (6) anstellbaren Reibstößel (12), ein drehbares Betätigungsmittel (10) und ein Steigungsgetriebe (17) mit einer gebogenen Steigungsbahn zur Umsetzung der Drehbewegung des Betätigungsmittels (10) in eine Vorschubbewegung des Reibstößels (12) aufweist, **dadurch gekennzeichnet, dass** der Vorschub des Reibstößels (12) durch einen Treibring (19) des Steigungsgetriebes (17) bewirkt wird, der auf und entlang der Längsachse (13) des Reibstößels (12) bewegt wird.

## Claims

1. Trailer coupling having a friction brake (2) which comprises at least one friction plunger (12) which can be applied laterally to a towing vehicle-side coupling element (6), a rotatable actuating means (10) and a pitch mechanism (17) having a curved pitch track for converting the rotary movement of the actuating means (10) into an advancing movement of the friction plunger (12), **characterized in that** the pitch mechanism (17) comprises a drive ring (19) which is movably arranged on and along the longitudinal axis (13) of the friction plunger (12) and causes the friction plunger (12) to advance.

2. Trailer coupling according to Claim 1, **characterized in that** the friction brake (2) comprises two mutually opposite friction plungers (12) and two pitch mechanisms (17) and also a preferably common actuating means (10).

3. Trailer coupling according to Claim 1 or 2, **characterized in that** the pitch mechanism (17) comprises a loose drive ring (19), wherein the curved pitch track is arranged as a wedge cam track (24, 25) at the end-side contact region between the drive ring (19) and actuating means (10).

4. Trailer coupling according to Claim 1, 2 or 3, **characterized in that** the pitch mechanism (17) takes the form of a double cam mechanism (18) which comprises curved end-side wedge cam track (24, 25) on the drive ring (19) and on the actuating means (10) which interact in a straight-increasing manner and are preferably arranged concentrically to the longitudinal axis (13).

5. Trailer coupling according to one of the preceding claims, **characterized in that** the actuating means (10) is rotatably mounted about the longitudinal axis (13) on the coupling housing (7), in particular on the outer side on a lateral housing extension (41), by means of a bearing arrangement (11), in particular a rolling bearing (46).

6. Trailer coupling according to one of the preceding claims, **characterized in that** the friction brake (2) comprises an end-position lock (21), preferably on the rectilinear guide (20).

7. Trailer coupling according to one of the preceding claims, **characterized in that** the drive ring (19) acts on the friction plunger (12) via a spring arrangement (14).

8. Trailer coupling according to Claim 7, **characterized in that** the spring arrangement (14) comprises a tension spring (15), which acts between the drive ring (19) and friction plunger (12), and possibly a resetting spring (16) for the drive ring (19).

9. Trailer coupling according to one of the preceding claims, **characterized in that** the friction brake (2) comprises a guide device (29) for the friction plunger (12) and the drive ring (19) and also possibly the spring arrangement (14).

10. Trailer coupling according to Claim 9, **characterized in that** the guide device (29) comprises an axial guide sleeve (33, 36) in which a plunger shaft (28) of the friction plunger (12) is guided on the inner side and the drive ring (19) and also possibly the spring arrangement (14) are guided on the outer side.

11. Trailer coupling according to one of the preceding claims, **characterized in that** the friction plunger (12) comprises a releasable and advanced movement-tolerant arresting means (30), in particular on the guide device (29).

12. Trailer coupling according to one of the preceding claims, **characterized in that** the actuating means (10) comprises an arm (39) and an end-side, pot-like actuating head (40).

13. Trailer coupling according to Claim 12, **characterized in that** the pot-like actuating head (40) comprises on the inner side, in particular on its bottom, at least one wedge cam track (25) and possibly a guide sleeve (33).

14. Vehicle trailer having a trailer coupling (1) with a friction brake (2), **characterized in that** the trailer coupling (1) is designed according to at least one of Claims 1 to 13.

15. Method for frictionally damping swaying movements of a vehicle trailer (3) by means of a trailer coupling (1) with a friction brake (2) which comprises at least one friction plunger (12) which can be laterally applied to a towing vehicle-side coupling element (6), a rotatable actuation means (10) and a pitch mechanism (17) have a curved pitch track for conversing the rotary movement of the actuating means (10) into an advancing movement of the friction plunger (12), **characterized in that** the friction plunger (12) is caused to advance by means of a drive ring (19) of the pitch mechanism (17) that is moved on and along the longitudinal axis (13) of the friction plunger (12).

## Revendications

1. Attelage de remorque pourvu d'un frein à friction (2), lequel attelage comporte au moins un poussoir à friction (12) réglable latéralement sur un élément d'attelage (6) situé du côté véhicule tracteur, un moyen d'actionnement rotatif (10) et une transmission inclinée (17) pourvue d'une piste inclinée courbe et destinée à convertir le mouvement de rotation du moyen d'actionnement (10) en un mouvement d'avance du poussoir à friction (12), **caractérisé en ce que** la transmission inclinée (17) comporte une bague d'entraînement (19) qui est disposée de manière mobile sur l'axe longitudinal (13), et le long de celui-ci, du poussoir à friction (12) et génère l'avance du poussoir à friction (12).

2. Attelage de remorque selon la revendication 1, **caractérisé en ce que** le frein à friction (2) comporte deux poussoirs à friction opposés (12) et deux transmissions inclinées (17) et un moyen d'actionnement (10) de préférence commun.

3. Attelage de remorque selon la revendication 1 ou 2, **caractérisé en ce que** la transmission inclinée (17) comporte une bague d'entraînement lâche (19), la piste inclinée courbe étant disposée comme une piste de came de coin (24, 25) au niveau de la zone de contact côté frontal entre la bague d'entraînement (19) et le moyen d'actionnement (10).

4. Attelage de remorque selon la revendication 1, 2 ou 3, **caractérisé en ce que** la transmission inclinée (17) est conçue comme une transmission à double came (18) qui comporte, au niveau de la bague d'entraînement (19) et du moyen d'actionnement (10), des pistes de came de coin côté frontal (24, 25) qui sont courbes, qui sont disposées de préférence concentriquement à l'axe longitudinal (13) et qui coopèrent dans le sens du levage.

5. Attelage de remorque selon l'une des revendications précédentes, **caractérisé en ce que** le moyen d'actionnement (10) est monté de manière à pouvoir tourner sur l'axe longitudinal (13) sur le carter d'attelage (7), notamment du coté extérieur sur un prolongement de carter latéral (41), à l'aide d'un palier (11), en particulier d'un palier à roulement (46).

6. Attelage de remorque selon l'une des revendications précédentes, **caractérisé en ce que** le frein à friction (2) comporte une sécurité de position finale (21), de préférence sur le guide linéaire (20).

7. Attelage de remorque selon l'une des revendications précédentes, **caractérisé en ce que** la bague d'entraînement (19) agit sur le poussoir à friction (12) par le biais d'un ensemble à ressort (14).

8. Attelage de remorque selon la revendication 7, **caractérisé en ce que** l'ensemble à ressort (14) comporte un ressort tendeur (15) qui agit entre la bague d'entraînement (19) et le poussoir à friction (12) et éventuellement un ressort de rappel (16) destiné à la bague d'entraînement (19).

9. Attelage de remorque selon l'une des revendications précédentes, **caractérisé en ce que** le frein à friction (2) comporte un dispositif de guidage (29) destiné au poussoir à friction (12) et à la bague d'entraînement (19) ainsi qu'éventuellement à l'ensemble à ressort (14).

10. Attelage de remorque selon la revendication 9, **caractérisé en ce que** le dispositif de guidage (29) comporte un manchon de guidage axial (33, 36) dans lequel un axe de poussoir (28) du poussoir à friction (12) est guidé du côté intérieur et au niveau duquel la bague d'entraînement (19) et éventuellement l'ensemble à ressort (14) sont guidés du côté extérieur.

11. Attelage de remorque selon l'une des revendications précédentes, **caractérisé en ce que** le poussoir à friction (12) comporte un verrouillage (30) débrayable et tolérant à l'avance, notamment sur le dispositif de guidage (29).

12. Attelage de remorque selon l'une des revendications précédentes, **caractérisé en ce que** le moyen d'actionnement (10) comporte un bras (39) et une tête d'actionnement (40) en forme de pot du côté frontal.

13. Attelage de remorque selon la revendication 12, **caractérisé en ce que** la tête d'actionnement (40) en forme de pot comporte du côté intérieur, notamment au fond, au moins une piste de came de coin (25) et éventuellement un manchon de guidage (33).

14. Remorque de véhicule munie d'un attelage de remorque (1) pourvu d'un frein à friction (2), **caractérisée en ce que** l'attelage de remorque (1) est conçu selon l'une au moins des revendications 1 à 13.

15. Procédé d'amortissement par friction de mouvements de roulis d'une remorque de véhicule (3) au moyen d'un attelage de remorque (1) pourvu d'un frein à friction (2) qui comporte au moins un poussoir à friction (12) qui peut être réglé latéralement sur un élément d'attelage (6) du côté tracteur, un moyen d'actionnement rotatif (10) et une transmission inclinée (17) pourvue d'une piste inclinée courbe pour convertir le mouvement de rotation du moyen d'actionnement (10) en un mouvement d'avance du poussoir à friction (12),
**caractérisé en ce que** l'avance du poussoir à friction (12) est provoquée par une bague d'entraînement (19) de la transmission inclinée (17) qui est déplacée sur l'axe longitudinal (13), et le long de celui-ci, du poussoir à friction (12).
